Europäisches Patentamt

European Patent Office

Office européen des brevets

(11) Veröffentlichungsnummer: **0 113 099**
**B1**

(12) **EUROPÄISCHE PATENTSCHRIFT**

(45) Veröffentlichungstag der Patentschrift:
**01.04.87**

(21) Anmeldenummer: **83112805.3**

(22) Anmeldetag: **20.12.83**

(51) Int. Cl.⁴: **C 08 L 53/02**, C 08 L 25/06

(54) **Thermoplastische Formmasse.**

(30) Priorität: **31.12.82 DE 3248746**

(43) Veröffentlichungstag der Anmeldung:
**11.07.84 Patentblatt 84/28**

(45) Bekanntmachung des Hinweises auf die Patenterteilung:
**01.04.87 Patentblatt 87/14**

(84) Benannte Vertragsstaaten:
**BE DE FR GB NL**

(56) Entgegenhaltungen:
**DE - A - 2 610 068**

(73) Patentinhaber: **BASF Aktiengesellschaft,
Carl-Bosch-Strasse 38, D-6700 Ludwigshafen (DE)**

(72) Erfinder: **Pohrt, Juergen, Renchener Strasse 7,
D-6800 Mannheim 61 (DE)**
Erfinder: **Jenne, Helmut, Dr., Grosser Moench 6,
D-6905 Schriesheim (DE)**
Erfinder: **Gausepohl, Hermann, Dr., Neuweg 10,
D-6704 Mutterstadt (DE)**
Erfinder: **Gerberding, Karl, Dr., In der Dreispitz 9,
D-6706 Wachenheim (DE)**
Erfinder: **Heinz, Gerhard, Dr., Im Vogelsang 2,
D-6719 Weisenheim (DE)**

## Beschreibung

Die Erfindung betrifft eine thermoplastische Formmasse aus Polystyrol und einem verzweigten Blockpolymerisat. Zum Stand der Technik nennen wir die DE-A 2 610 068 (1).

Die aus (1) bekannten Mischungen von verzweigten Blockcopolymerisaten mit Standard-Polystyrol befriedigen häufig nicht voll in ihrer Transparenz und in ihrem Glanzgrad. Verwendet man in den Mischungen ein Polystyrol mit zu niedrigem Molekulargewicht sinkt das mechanische Niveau ab; wird ein zu hohes Molekulargewicht gewählt, kommt es leicht zu Einbussen des Glanzgrades und der Transparenz. Weiterhin wird das Fliessverhalten schlechter, so dass Probleme, wie Stippen und Anwachsungen beachtlich werden. Diese negativen Eigenschaften sollen beseitigt werden.

Diese Aufgabe wird gelöst durch eine Formmasse bestehend aus den Komponenten A, B und C gemäss Patentanspruch 1.

Nachstehend wird der Aufbau der Komponenten der Formmasse der Aufbau und die Herstellung der Formmasse beschrieben.

### Komponente A

Die Komponente A der erfindungsgemässen Formmasse stellt ein niedermolekulares Standard-Polystyrol, insbesondere Homopolystyrol dar, das in Mengen von 2 bis 45 Gew.%, insbesondere von 7 bis 35 Gew.%, jeweils bezogen auf die Formmasse aus A+B+C, angewendet wird. Das niedermolekulare Standard-Polystyrol sollte eine Viskositätszahl im Bereich von 65 bis 78 ccm/g haben und eine Molekulargewichtsverteilung, die durch ein $M_w/M_n$-Verhältnis im Bereich von 1,5 bis 4,0 charakterisiert ist.

Das vorstehende Verhältnis wird auch als molekulare Heterogenität bezeichnet.

Das als Komponente A der erfindungsgemässen Formmasse einzusetzende Polystyrol kann auf bekannte und übliche Weise durch Polymerisation von Styrol in Masse, Lösung und wässriger Dispersion hergestellt werden. Vorzugsweise wird ein Polystyrol eingesetzt, das durch Masse- oder Lösungspolymerisation erhalten worden ist.

### Komponente B

Sie ist in einem Anteil von [100-(+C)] in der Formmasse zugegen; sie macht somit 97,9 bis 50 Gew.% aus.

Komponente B ist ein nicht elastomeres, sternförmig verzweigtes Blockcopolymerisat aus einem überwiegenden Anteil eines monovinylaromatischen Monomeren und einem untergeordneten Anteil eines konjugierten Diens.

Monovinylaromatische Monomere, die für den Aufbau der verzweigten Blockcopolymerisate in Betracht kommen, sind beispielsweise Styrol, die seitenkettenalkylierten Styrole, wie α-Methylstyrol, und die kernsubstituierten Styrole, insbesondere p-Methyl-Styrol oder Ethylvinylbenzol. Die monovinylaromatischen Verbindungen können dabei alleine oder in Mischung miteinander eingesetzt werden. Vorzugsweise wird jedoch Styrol allein verwendet. Als konjugierte Diene werden im allgemeinen solche mit 4 bis 8 Kohlenstoffatomen eingesetzt. Beispiele für konjugierte Diene, die allein oder in Mischung miteinander für die Herstellung der verzweigten Blockcopolymerisate herangezogen werden können, sind Butadien, Isopren sowie 2,3-Diemethyl-butadien. Besonders günstig sind dabei Butadien oder Isopren, wobei wiederum Butadien bevorzugt wird.

Die verzweigten Blockcopolymerisate der erfindungsgemässen Formmasse sollen insgesamt 60 bis 95 Gew.%, insbesondere 65 bis 75 Gew.%, des monovinylaromatischen Monomeren und 40 bis 5 Gew.%, vorzugsweise 35 bis 25 Gew.%, des konjugierten Diens, jeweils bezogen auf die insgesamt eingesetzten Monomeren, einpolymerisiert enthalten. Das Molekulargewicht der verzweigten Blockcopolymerisate liegt dabei in der Regel im Bereich von 50 000 bis 1 000 000, und beträgt vorzugsweise 100 000 bis 500 000. Bei diesen Angaben handelt es sich um das Gewichtsmittel des Molekulargewichts, bestimmt durch Viskositätsmessungen in 0,5 gew.%iger Toluol-Lösung bei 25°C.

Die als Komponente B einzusetzenden sternförmig verzweigten Blockcopolymerisate bestehen in ihren Verzweigungen aus Copolymerisatblöcken, in denen die monovinylaromatische Verbindung und das konjugierte Dien blockförmig unter Bildung einzelner Polymersegmente eingebaut sind. Diese blockförmig aufgebauten Copolymerisatblöcke, die die Verzweigungen bilden, sind dabei über ein Kupplungsmittel chemisch miteinander verknüpft. Die sternförmig verzweigten Blockcopolymerisate besitzen mindestens 3, im allgemeinen 3 bis 10, und vorzugsweise 3 oder 4 solcher Verzweigungen, wobei diese Verzweigungen aus mindestens zwei Arten von Copolymerisatblöcken bestehen sollen, die einen im Durchschnitt unterschiedlichen Aufbau haben. Weiterhin sollen mindestens 50 Gew.%, vorzugsweise mindestens 60 Gew.% der insgesamt in dem sternförmig verzweigten Blockcopolymerisat einpolymerisierten monovinylaromatischen Verbindung in einem oder mehreren der Copolymerisatblöcke der Verzweigungen als endständiges Homopolymersegment eingebaut sein.

Vorzugsweise werden als Komponente B der erfindungsgemässen Formmasse sternförmig verzweigte Blockcopolymerisate eingesetzt, die im Durchschnitt als wahrscheinlichste Struktur eine solche der nachfolgenden allgemeinen Formel (I), (II) oder (III) aufweisen:

$$(A-B)_k-X, \qquad (I)$$
$$(A^1-B^1{\rightarrow}A^2)_n-X-(A^2{\leftarrow}B^1)_m \qquad (II)$$
$$(A^3-A^4-B^2{\rightarrow}A^5)_n-X-(A_2{\leftarrow}B^2-A^4)_m. \qquad (III)$$

In diesen allgemeinen Formeln (I) – (III) bedeuten:

A, $A^1$-$A^5$ nicht elastomere Polymersegmente aus der monovinylaromatischen Verbindung, wobei die Polymersegmente A in dem Polymerisat (I) eine polymodale, vorzugsweise bimodale Molekulargewichtsverteilung aufweisen sollen, während die einzelnen Polymersegmente $A^1$-$A^5$ in den Polymeren (II) und (III) jeweils eine einheitliche Molekulargewichtsverteilung aufweisen.

B, $B^1$, $B^2$ elastomere Polymersegmente auf Basis des konjugierten Diens,

X den Rest eines polyfunktionellen Kupplungsmittels, über den die die Verzweigungen bildenden Copolymerisatblöcke chemisch miteinander verknüpft sind,

k eine ganze Zahl von mindestens 3, im allgemeinen im Bereich von 3 bis 10 und vorzugsweise 3 oder 4 und

m, n Zahlen, wobei m gleich oder grösser ist als n und die Summe von m und n mindestens 3, im allgemeinen eine ganze Zahl im Bereich von 3 bis 10 und vorzugsweise 3 oder 4 ist.

Das Symbol $\rightarrow$ in den allgemeine Formeln (II) und (III) bedeutet, dass der Übergang zwischen den betreffenden Polymersegmenten nicht scharf getrennt ist, sondern allmählich erfolgt. Das nicht elastomere Polymersegment A kann dabei ein Homopolystyrol-Segment darstellen oder auch ein Copolymerisat aus einem vinylaromatischen Monomeren und einem konjugierten Dien in einem solchen Mischungsverhältnis, dass die Glastemperatur gemessen nach der DSC-Methode über 45°C liegt. Molekulargewicht und Polymodalität richten sich vornehmlich nach dem für das Endprodukt vorgesehenen Verwendungszweck. Das Molekulargewicht wird dabei, wie weiter unten ausgeführt wird, durch die Menge des bei der Herstellung pro Mol der Monomeren eingesetzten Initiators bestimmt; die Polymodalität hängt von der Häufigkeit der Initiatorzugabe bei der Polymerisation ab und ist vorzugsweise 2 oder 3 und insbesondere 2. das elastomere Polymersegment B auf Basis der konjugierten Diene ist vorzugsweise ein Homopolydiensegment, insbesondere ein Homopolybutadien- oder Homopolyisoprensegment. Es kann aber auch geringe Mengen, etwa bis zu 30 Gew.%, vorzugsweise unter 20 Gew.%, bezogen auf das Polymersegment B, an anderen copolymerisierbaren Monomeren, insbesondere an Styrol, einpolymerisiert enthalten.

In den sternförmig verzweigten Blockcopolymerisaten, die im Durchschnitt als wahrscheinlichste Struktur eine solche der allgemeinen Formel (II)

$$(A^1\text{-}B^1\rightarrow A^2)_n\text{-}X\text{-}(A^2\leftarrow B^1)_m$$

besitzen, enthält das nicht elastomere Polymersegment $A^1$ vorteilhaft 60 bis 90 Gew.%, vorzugsweise 65 bis 80 Gew.%, des insgesamt zur Herstellung des verzweigten Blockcopolymerisats einpolymerisierten monovinylaromatischen Monomeren einpolymerisiert und stellt insbesondere ein Homopolystyrolsegment dar. Sein Molekulargewicht richtet sich vornehmlich nach dem für das Endprodukt vorgesehenen Verwendungszweck und liegt vorzugsweise im Bereich von 50 000 bis 250 000. Das elastomere Polymersegment $B^1$ ist ein Copolymerisatblock aus im wesentlichen dem konjugierten Dien sowie einem geringen Anteil an monovinylaromatischen Monomeren mit weitgehend statistischer Verteilung der Monomeren. Der Anteil des monovinylaromatischen Monomeren im Polymersegment $B^1$ liegt im allgemeinen unter 30 Gew.% und insbesondere etwa unter 20 Gew.%, bezogen auf die Menge an monovinylaromatischem Monomeren des verzweigten Blockcopolymerisats, die nicht im Polymersegment $A^1$ eingebaut ist. Der Übergang zwischen den Polymersegmenten $A^1$ und $B^1$ ist dabei scharf getrennt, während der Übergang zwischen den Polymersegmenten $B^1$ und $A^2$ dadurch allmählich erfolgt, dass der Anteil des monovinylaromatischen Monomeren im Polymersegment $B^1$ in Richtung auf das Polymersegment $A^2$ immer stärker zunimmt und der Anteil des konjugierten Diens dementsprechend ständig abnimmt. Die nicht elastomeren Polymersegmente $A^2$ sind wie das Polymersegment $A^1$ vorzugsweise Homopolystyrolsegmente. Das Molekulargewicht der Polymerblöcke ($B^1\rightarrow A^2$) beträgt vorzugsweise 10 000 bis 100 000.

In den sternförmig verzweigten Blockcopolymerisaten, die im Durchschnitt als wahrscheinlichste Struktur eine solche der allgemeinen Formel (III)

$$(A^3\text{-}A^4\text{-}B^2\rightarrow A^5)_n\text{-}X\text{-}(A^5\leftarrow B^2\text{-}A^4)_m$$

besitzen, enthält das nicht elastomere Polymersegment $A^3$ vorteilhaft 40 bis 80 Gew.%, vorzugsweise 50 bis 70 Gew.%, des insgesamt zur Herstellung des verzweigten Blockcopolymerisats einpolymerisierten monovinylaromatischen Monomeren einpolymerisiert und stellt insbesondere ein Homopolystyrolsegment dar. Sein Molekulargewicht liegt vorzugsweise im Bereich von 50 000 bis 250 000. Die Polymersegmente $A^4$ entsprechen den Polymersegmenten $A^3$, nur dass sie ein geringeres Molekulargewicht, üblicherweise zwischen 5000 und 50 000, besitzen. Sie enthalten 1 bis 30 Gew.% und vorzugsweise 5 bis 25 Gew.% des gesamten monovinylaromatischen Monomeren einpolymerisiert, wobei die Summe des in den Polymersegmenten $A^3$ und $A^4$ einpolymerisierten monovinylaromatischen Monomeren jedoch 90 Gew.% der insgesamt für die Herstellung der verzweigten Blockcopolymerisate eingesetzten Menge an monovinylaromatischem Monomeren nicht übersteigen soll. Das elastomere Polymersegment $B^2$ ist ein Copolymerisatbock aus im wesentlichen dem konjugierten Dien sowie einem geringen Anteil an monovinylaromatischem Monomeren mit weitgehend statistischer Verteilung der Monomeren. Der Anteil des monovinylaromatischen Monomeren im Polymersegment $B^2$ liegt im allgemeinen etwa unter 30 Gew.% und insbesondere etwa unter 20 Gew.%, bezogen auf die Menge an monovinylaromatischem Monomeren, die nicht in den Polymersegment $A^3$ und $A^4$ eingebaut ist. Der Übergang zwischen den Polymersegmenten $A^4$ und $B^2$ ist dabei scharf getrennt, während der Übergang zwischen Polymersegmenten B² und A⁵ allmählich erfolgt. Die nicht elastomeren Polymersegmente A³ sind, wie die Polymersegmente A³ und A⁴, vorzugsweise Homostyrolsegmente. Das Molekulargewicht der Polymerblöcke (A³-A⁴-B²→A⁵) liegt vorzugsweise im Bereich von 100 000 bis 500 000, das der Polymerblöcke (A⁴-B²→A⁵) im Bereich von 10 000 bis 100 000.

Als Komponente B kann man auch nicht elastomere, sternförmig verzweigte Blockcopolymersate einsetzen, deren Gehalt an olefinischen Doppelmengen durch selektive Hydrierung bis auf einen Restanteil von weniger als 5%, vorzugsweise weniger als 2% reduziert worden ist.

Der spezielle Aufbau und die Struktur der sternförmig verzweigten Blockcopolymersate hängen ab von von den für die Polymerisation der Monomeren gewählten Massnahmen und werden durch diese bestimmt. Allgemein werden die nicht elastomeren, sternförmig verzweigten Blockcopolymerisate, die für den Einsatz als Komponente B in den erfindungsgemässen Mischungen geeignet sind, durch aufeinanderfolgende Polymerisation der Monomeren in Lösung in Gegenwart eines Monolithium-Kohlenwasserstoffs als Initiator unter stufenweiser Monomer- und Initiatorzugabe und anschliessender Kupplung der erhaltenen lebenden linearen Blockcopolymerisate mit einer polyfunktionellen, reaktionsfähigen Verbindung als Kupplungsmittel hergestellt, wie dies z.B. in (1) ausführlich beschrieben ist.

Zur Herstellung von sternförmig verzweigten Blockcopolymerisaten der allgemeinen Formel (I) (A-B)$_k$-X, die eine polymodale Verteilung in den nicht elastomeren, aus den monovinylaromatischen Verbindungen aufgebauten Polymersegmenten A aufweisen, verfährt man beispielsweise so, dass man zu der in der ersten Verfahrensstufe hergestellten Reaktionslösung zunächst das restliche monovinylaromatische Monomere d.h. 20 bis 50 Gew.%, vorzugsweise von 25 bis 40 Gew.% des insgesamt für die Herstellung des verzweigten Blockcopolymerisates eingesetzten monovinylaromatischen Monomeren in einem oder mehreren Anteilen zugibt, wobei jede Teilzugabe der monovinylaromatischen Verbindung von der Zugabe einer weiteren zusätzlichen Initiator-Menge begleitet wird, die mindestens gleich gross oder grösser ist als die ursprüngliche Initiatormenge, die in der ersten Verfahrensstufe der Polymerisation eingesetzt worden ist. Obwohl es möglich ist, den restlichen Anteil des monovinylaromatischen Monomeren in der zweiten Verfahrensstufe der Reaktionslösung in so vielen Anteilen wie gewünscht zuzusetzen, wird es bevorzugt, das restliche monovinylaromatische Monomere in der zweiten Verfahrensstufe in 1 oder 2 Anteilen zu der Polymerisationslösung zuzugeben, wobei sich der Zusatz des restlichen monovinylaromatischen Monomeren in einem Anteil als besonders vorteilhaft erwiesen hat. Die in der zweiten Verfahrensstufe zugegebenen monovinylaromatischen Monomeren werden dabei sowohl an die aktiven, lithiumterminierten Kettenenden der zuvor gebildeten Polymerisate angelagert, als auch werden durch den jeweils zusätzlich zugegebenen frischen Initiator neue Ketten von lebenden Polymeren gebildet. Nach Auspolymerisation des restlichen monovinylaromatischen Monomeren liegt somit eine Lösung vor, die Polymerisate des monovinylaromatischen Monomeren mit im Durchschnitt unterschiedlichen Kettenlängen enthält, d.h. die gebildeten, nicht elastomeren Polymersegmente A aus dem monovinylaromatischen Monomeren besitzen eine polymodale Verteilung, wobei die Polymodalität der Polymersegmente A der Gesamtzahl der Initiator- und Monomerzugaben entspricht. Anschliessend wird in einem zweiten Schritt die Gesamtmenge des konjugierten Diens zugesetzt und bis zum vollständigen Umsatz polymerisiert. Dabei lagert sich das konjugierte Dien an die aktiven, lithiumterminierten Kettenenden der zuvor gebildeten polymodalen, nicht elastomeren Polymersegmente A unter Bildung der elastomeren Polymersegmente B an, so dass in der Reaktionslösung die die Verzweigungen bildenden Copolymerisatblöcke (A-B) mit einer aktiven reaktionsfähigen Lithium-Kohlenstoff-Bindung am freien Ende des elastomeren Dienpolymersegmentes B vorliegen, die anschliessend gekuppelt werden.

Zur Herstellung von sternförmig verzweigten Blockcopolymerisaten der allgemeinen Formel (II)

$$(A^1\text{-}B^1\rightarrow A^2)_n\text{-}X\text{-}(A^2\leftarrow B^1)_m$$

verfährt man in der zweiten Verfahrensstufe der Polymerisation so, dass man der auspolymerisierten Reaktionslösung der ersten Verfahrensstufe nach Zugabe einer weiteren zusätzlichen Initiatormenge eine Mischung aus der restlichen monovinylaromatischen Monomeren und der Gesamtmenge des konjugierten Dien zusetzt und polymerisiert. Dabei werden die in der zweiten Verfahrensstufe zugegebenen Monomeren sowohl an die aktiven, lebenden Kettenenden der zuvor gebildeten Polymersegmente A¹ angelagert, als auch werden durch den zusätzlichen frischen Initiator neue Ketten von lebenden Polymeren gebildet. Infolge der unterschiedlichen Copolymerisationsparameter polymerisieren die konkugierten Diene dabei wesentlich rascher als die monovinylaromatischen Monomeren, so dass nach Zugabe der Monomer-Mischung in der zweiten Verfahrensstufe zunächst überwiegend die konjugierten Diene und nur vereinzelt die monovinylaromatischen Monomeren einpolymerisiert werden. Erst gegen Ende der Dien-Polymerisation, d.h. wenn fast alles konjugiertes Dien auspolymerisiert ist, setzt die Polymerisation der monovinylaromatischen Monomeren in merklichem Masse ein, so dass der überwiegende Anteil – in der Regel mehr als 70, und überwiegend mehr als 80 Gew.% – des in der Monomer-Mischung enthalten monovinylaromatischen Monomeren erst nach Verbrauch der konjugierten Diene polymerisiert. Somit entsteht in diesem Fall in der zweiten Verfahrensstufe zunächst das elastome-

re Polymersegment $B^1$ auf der Basis des konjugierten Diens, welches ein Copolymerisatsegment aus hauptsächlich dem konjugierten Dien und geringen Mengen des monovinylaromatischen Monomeren ist, wonach anschliessend das nicht elastomere Polymersegment $A^2$ gebildet wird, welches nur aus dem monovinylaromatischen Monomeren aufgebaut ist. Da der Anteil der monovinylaromatischen Monomeren gegen Ende des Polymersegments $B^1$ immer stärker zunimmt und der Anteil des konjugierten Diens dementsprechend ständig abnimmt, ist der Übergang zwischen den so gebildeten Polymersegmenten $B^1$ und $A^2$ nicht scharf, sondern erfolgt allmählich; vielfach spricht man daher auch von einem «verschmierten» Übergang zwischen den Segmenten. Nach Auspolymerisation der Monomeren-Mischung in der zweiten Verfahrensstufe liegt somit in der Reaktionslösung ein Gemisch aus den die Verzweigungen bildenden linearen Blockcopolymerisaten des Typs $(A^1\text{-}B^1\rightarrow A^2)$ und $(B^1\rightarrow A^2)$ mit aktiven reaktionsfähigen Lithium-Kohlenstoff-Bindungen jeweils am freien Ende der Polymersegmente $A^2$ vor. Das Verhältnis der zwei Typen von Blockcopolymerisaten in der Reaktionslösung entspricht dabei dem Initiator-Verhältnis in der ersten und zweiten Verfahrensstufe. Das Gemisch dieser beiden Typen von Blockcopolymerisaten wird dann durch Zusatz einer polyfunktionellen reaktiven Verbindung als Kupplungsmittel zu der Reaktionslösung gekuppelt.

Zur Herstellung von sternförmig verzweigten Blockcopolymerisaten der allgemeinen Formel (III)

$$(A^3\text{-}A^4\text{-}B^2\rightarrow A^5)_n\text{-}X\text{-}(A^5\leftarrow B^2\text{-}A^4)_m$$

verfährt man in der zweiten Verfahrensstufe der Polymerisation so, dass man zunächst zu der auspolymerisierten Reaktionslösung der ersten Verfahrensstufe nach Zugabe einer weiteren zusätzlichen Initiatormenge weitere 1 bis 30 Gew.%, vorzugsweise 5 bis 25 Gew.% der Gesamtmenge der für die Herstellung der verzweigten Blockcopolymerisate insgesamt verwendeten monovinylaromatischen Monomeren zusetzt. Die Summe der in der ersten und zweiten Verfahrensstufe eingesetzten Menge an monovinylaromtischer Monomeren soll dabei jedoch höchstens 90 Gew.% der Gesamtmenge der monovinylaromatischen Verbindung, die insgesamt für die Herstellung der verzweigten Blockcopolymerisate verwendet wird, betragen. Die zugegebenen monovinylaromatischen Monomeren werden dabei unter Bildung der Polymersegmente $A^4$ sowohl an die aktiven, lithiumterminierten Kettenenden der zuvor in der ersten Verfahrensstufe gebildeten Polymersegmente $A^3$ angelagert als auch werden durch den zusätzlichen frischen Initiator neue Ketten von lebenden Polymeren der monovinylaromatischen Monomeren gebildet. Nach Auspolymerisation des in der zweiten Verfahrensstufe zunächst zugesetzten monovinylaromatischen Monomeren liegt somit eine Lösung vor, die lebende Polymerisate des monovinylaromatischen Monomeren mit im Durchschnitt zwei unterschiedlichen Kettenlängen enthält, nämlich zum einen aktive, lebende Polymersegmente des Typs $(A^3\text{-}A^4)$, die durch Anlagerung des in der zweiten Verfahrensstufe zunächst zugegebenen monovinylaromatischen Monomeren an die in der ersten Verfahrensstufe vorgebildeten, lebenden Polymersegmente $A^3$ entstanden sind, zum anderen aktive, lebende Polymersegmente des Typs $A^4$ vorhanden, die durch Polymerisation des in der zweiten Verfahrensstufe zunächst zugegebenen monovinylaromatischen Monomeren mit dem zusätzlich zugegebenen, frischen Initiator gebildet worden sind. Das Verhältnis, in dem diese zwei Typen von nicht elastomeren Polymersegmenten auf der Basis der monovinylaromatischen Monomeren in der Reaktionslösung vorliegen, entspricht demzufolge dem Initiator-Verhältnis der ersten und zweiten Verfahrensstufe. Beide Typen der Polymersegmente $(A^3\text{-}A^4$ und $A^4)$ haben an ihrem einen Kettenende aktive, reaktionsfähige Lithium-Kohlenstoff-Bindungen, die zur weiteren Anlagerung von Monomeren fähig sind. Zu dieser Reaktionslösung wird dann eine Monomer-Mischung aus dem restlichen monovinylaromatischen Monomeren und der Gesamtmenge des konjugierten Diens zugesetzt und zum praktisch vollständigen Umsatz der Monomeren polymerisiert. Wie oben beschrieben, entsteht bei der Polymerisation der Monomeren-Mischung aus restlicher monovinylaromatischem Monomer und konjugiertem Dien infolge der unterschiedlichen Copolymerisationsparameter der Monomeren zunächst das elastomere Polymersegment $B^2$ auf der Basis des konjugierten Diens, welches ein Copolymerisat aus hauptsächlich dem konjugierten Dien und geringen Mengen des monovinylaromatischen Monomeren ist, wonach anschliessend ein nicht-elastomeres Polymersegment $A^5$ gebildet wird, welches nur aus den monovinylaromatischen Monomeren aufgebaut ist. Da dabei das monovinylaromatische Monomer am Ende des Polymersegments $B^2$ in immer stärkerem Masse einpolymerisiert wird und der Anteil des konjugierten Diens dementsprechend ständig abnimmt, ist der Übergang zwischen den gebildeten Polymersegmenten $B^2$ und $A^5$ nicht scharf, sondern erfolgt allmählich. Nach Auspolymerisation der Monomeren-Mischung aus dem restlichen monovinylaromatischen Monomeren und dem konjugierten Dien liegt in der Reaktionslösung ein Gemisch aus den die Verzweigungen bildenden linearen Blockcopolymerisaten des Typs $(A^3\text{-}A^4\text{-}B^2\rightarrow A^5)$ und $(A^4\text{-}B^2\leftarrow A^5)$ mit aktiven, reaktionsfähigen Lithium-Kohlenstoff-Bindungen jeweils am freien Ende der Polymersegmente $A^5$ vor, die anschliessend zu dem sternförmig verzweigten Blockcopolymerisat gekuppelt werden.

Die Isolierung der erhaltenen verzweigten Blockcopolymerisate aus der Reaktionslösung erfolgt in üblicher Weise, beispielsweise durch Ausfällen und Abfiltrieren des Polymerisats aus der Reaktionslösung.

Anschliessend an die Kupplungsreaktion und zweckmässigerweise vor der Isolierung des Reaktionsproduktes aus der Reaktionslösung können gegebenenfalls die olefinischen Doppelbindungen der erhaltenen verzweigten Blockcopolymerisate noch selektiv hydriert werden. Die selektive Hydrierung kann mit Hilfe von molekularem Wasserstoff und Katalysatoren auf Basis von Metallen oder Metallsalzen der 8. Gruppe des Periodensystems durchgeführt werden, wie es beispielsweise in der US-PS 3 113 986, der DT-AS 1 222 260, der DT-OS 2 013 263 oder der US-PS 3 700 633 beschrieben ist.

Komponente C
Die Komponente C ist in einem Anteil von 0,1 bis 5 Gew.%, insbesondere von 0,2 bis 3 Gew.%, bezogen auf A+B+C, in der erfindungsgemässen Formmasse zugegeben.

Als Komponente C kommen übliche Schmiermittel in Frage. Beispielsweise seien aufgeführt:
Ethylenoxid-Propylenoxid-Blockcopolymerisate
Microhartwachse
Ethylen-bis-Stearylamid (Accrawachs)
Phthalsäureester
Metallseifen, insbesondere der Erdalkalien und des Zinks
Mineralöle auf Basis von insbesondere naphthenischen und paraffinischen Kohlenwasserstoffen (insbesondere die technischen und medizinischen Weissöle)
Silikonöle mit Viskositäten im Bereich von 0,5 bis 50 000 mPas u. dgl.

Die Komponenten A, B und C der erfindungsgemässen Formmasse können auf übliche Art und Weise nach den bekannten Methoden, beispielsweise in der Schmelze mittels geeigneter Mischvorrichtungen, beispielsweise Knetern, Innenmischern oder Extruder, homogen miteinander vermischt werden. Diesen Mischungen könnnen darüber hinaus noch weitere Zusatzstoffe wie Antistatika, Stabilisatoren etc., zugesetzt werden. Es ist auch möglich 2er-Mischungen, z.B. aus B+C, herzustellen und diese mit Komponente A abzumischen. Die erfindungsgemässen Formmassen lassen sich nach den üblichen Vorbereitungsverfahren für Thermoplaste, wie Extrudieren, Tiefziehen oder Spritzgiessen, leicht verarbeiten und eignen sich vor allem zur Herstellung von Formkörpern, wie Folien, Filmen, Platten und dergleichen sowie von Verpackungsmitteln.

Beispiele 1 und 2 und Vergleichsversuche 3 bis 10
Die erfindungsgemässen Produkte (Tabelle, Beispiele 1 und 2) und die Produkte der Vergleichsversuche (Tabelle Nr. 3 bis 10) wurden durch Mischen der Komponenten A, B und C in den in der Tabelle genannten Gewichtsteilen in Cyclohexan als Lösungsmittel hergestellt. Nach dem Entfernen des Lösungsmittels wurden die Produkte über einen 60 mm ⌀ Extruder (Tröster) zu 0,2 mm starken Folien verarbeitet, an denen die Transparenz (Lichtdurchlässigkeit in %) und der Glanzgrad nach DIN 67530 bei einem Einfallwinkel von 45°C gemessen wurde.

Als Komponenten für die Herstellung der Formmassen wurden verwendet:
Komponente A: Polystyrol mit Mw/Mn = 2,7 und folgenden Viskositätszahlen (cm³/g in Toluol bei 25°C)

$A_1$: VZ = 75
$A_2$: VZ = 95
$A_3$: VZ = 120

Komponente B: Anionisch polymerisiertes hochstyrolhaltiges Blockcopolymerisat, 56 Teile Styrol wurden in Cyclohexan mit 0,065 Teilen sec-Butyl-Lithium polymerisiert. Nach erneuter Zugabe von 0,065 Teilen sec-Butyl-Lithium wird die Mischung aus 28,5 Teilen Butadien und 15,5 Teilen Styrol polymerisiert. Mit 0,31 Teilen epoxidiertes Leinsamenöl wird gekoppelt und mit t-Butylkresol stabilisiert.

Komponente C: Weissöl auf Basis von naphthenischen paraffinischen Kohlenwasserstoffen (aromatenfrei).

Tabelle

| Beispiel | Komponenten der Formmasse | | | | Transparenz | Glanzgrad |
| | | A | B | C | | |
| | Art | Teile | Teile | Teile | [%] | [Skt] |
| --- | --- | --- | --- | --- | --- | --- |
| 1 | $A_1$ | 10 | 100 | 0,5 | 90,7 | 125 |
| 2 | $A_1$ | 30 | 100 | 1,5 | 90,0 | 124 |
| Vergleichsversuche | | | | | | |
| 3 | $A_1$ | 10 | 100 | – | 90,7 | 130 |
| 4 | $A_1$ | 30 | 100 | – | 90,4 | 131 |
| 5 | $A_2$ | 10 | 100 | – | 90,4 | 96 |
| 6 | $A_2$ | 30 | 100 | – | 89,4 | 95 |
| 7 | $A_3$ | 10 | 100 | 0,5 | 90,1 | 109 |
| 8 | $A_3$ | 30 | 100 | 1,5 | 87,9 | 65 |
| 9 | $A_3$ | 10 | 100 | – | 90,6 | 101 |
| 10 | $A_3$ | 30 | 100 | – | 87,5 | 60 |

## Patentanspruch

Thermoplastische Formmasse, enthaltend im wesentlichen
A) Polystyrol und
B) mindestens ein nicht elastomeres, sternförmig verzweigtes Blockcopolymerisat, welches aus 60 bis 95 Gew.% eines monovinylaromatischen Monomeren und 40 bis 5 Gew.% eines konjugierten Diens aufgebaut ist und welches mindestens zwei Arten von die Verzweigungen bildenden Copolymerisatblöcken mit einem im Durchschnitt unterschiedlichen Aufbau besitzt, wobei mindestens 50 Gew.% des insgesamt einpolymerisierten monovinylaromatischen Monomeren des sternförmig verzweigten Blockcopolymerisats blockförmig als endständiges Polymersegment in einem oder mehreren der Copolymerisatblöcke der Verzweigungen enthalten sind, dadurch gekennzeichnet, dass die Formmasse ausserdem als Komponente C ein Schmiermittel in einem Anteil von 0,1 bis 5 Gew.%, bezogen auf A+B+C, enthält und dass als Komponente A ein Polystyrol mit einer Viskositätszahl im Bereich von 65 bis 78 ccm/g verwendet wird, das eine molekulare Uneinheitlichkeit Mw/Mn von 1,5 bis 4 aufweist, und wobei die Komponente A in einem Anteil von 2 bis 45 Gew.%, bezogen auf A+B+C, vorhanden ist.

## Claim

A thermoplastic moulding material essentially containing
(A) polystyrene, and
(B) at least one non-elastomeric, radially branched block copolymer which consists of 60 to 95% by weight of a monovinylaromatic monomer and 40 to 5% by weight of a conjugated diene, and has at least two types of copolymer blocks forming the branches and having, on average, a different structure, at least 50% by weight of the total copolymerized monovinylaromatic monomer units of the radially branched block copolymer being contained in the form of a block as terminal polymer segment in one ore more of the copolymer blocks forming the branches, characterized in that the moulding material additionally contains, as component (C), a lubicant in an amount of from 0,1 to 5% by weight, based on (A) + (B) + (C), and that there is used as component (A) a polystyrene having a viscosity number of from 65 to 78 ccm/g and a ratio of the weight average molecular weight to the number average molecular weight $M_w/M_n$ of 1.5 to 4, component (A) being present in an amount of from 2 to 45% by weight, based on (A) + (B) + (C).

## Revendication

Matière de moulage thermoplastique, contenant essentiellement
A) du polystyrène et
B) au moins un copolymère séquencé ramifié en étoile, non élastomère, qui se compose de 60 à 95% en poids d'un monomère monovinylaromatique et de 40 à 5% en poids d'un diène conjugué et qui comporte au moins deux sortes de blocs de copolymère formant les ramifications qui ont une structure différente en moyenne, 50% en poids au moins du monomère monovinylaromatique contenu au total en liaison polymère dans le copolymère séquencé ramifié en étoile étant contenus sous forme de blocs en tant que segment terminal de polymère dans un ou plusieurs des blocs de copolymère des ramifications, caractérisée en ce que la matière de moulage contient en outre, en tant que composant C, un lubrifiant dans une proportion de 0,1 à 5% en poids sur la base de A + B + C, et en ce qu'il est utilisé, en tant que composant A, un polystyrène dont l'indice de viscosité se situe dans la gamme de 65 à 78 cm³/g et qui présente une hétérogénéité moléculaire Mw/Mn de 1,5 à 4, le composant A étant présent dans une proportion de 2 à 45% en poids sur la base de A + B + C.